Europäisches Patentamt

European Patent Office

Office européen des brevets

Veröffentlichungsnummer: **0 273 189**
**A1**

# EUROPÄISCHE PATENTANMELDUNG

Anmeldenummer: **87117188.0**

Int. Cl.⁴ **C07F 7/18**

Anmeldetag: **21.11.87**

Priorität: **06.12.86 DE 3641756**

Veröffentlichungstag der Anmeldung:
**06.07.88 Patentblatt 88/27**

Benannte Vertragsstaaten:
**BE DE FR GB IT NL**

Anmelder: **Hüls Troisdorf Aktiengesellschaft**
**Postfach 11 65**
**D-5210 Troisdorf(DE)**

Erfinder: **Zoche, Günter, Dr.**
**Königsheimstrasse 13**
**D-5300 Bonn 3(DE)**

## Verfahren zur Herstellung von Ketoximosilanen.

Vorliegende Erfindung beschreibt ein neues Verfahren zur Herstellung von Ketoximosilanen und Ketoximo-alkoxysilanen. Als Ausgangsverbindungen werden Alkyltrialkoxysilane eingesetzt, die mit Ketoximen in Anwesenheit eines Katalysators umgesetzt werden. Die Reaktion wird katalysiert durch basische Verbindungen, die in dem Ketoxim gelöst bzw. suspendiert werden. Als basische Verbindungen werden Alkalimetalle und vorzugsweise die Oxide, Hydroxide und Carbonate der Elemente aus der 1. und 2. Hauptgruppe und der 3. Nebengruppe des Periodischen Systems der Elemente und der Lanthaniden eingesetzt. Das erfindungsgemäße Verfahren verhindert die bei den bekannten Verfahren leicht auftretenden Zersetzungen und Explosionen. Die erfindungsgemäß hergestellten Ketoximosilane sind wertvolle Vernetzer für Organopolysiloxanmassen.

EP 0 273 189 A1

## Verfahren zur Herstellung von Ketoximosilanen

Gegenstand der vorliegenden Erfindung ist ein Verfahren zur Herstellung von Ketoximosilanen und Ketoximo-alkoxysilanen. Diese Siliciumverbindungen eignen sich insbesondere als vernetzende Siliciumverbindungen bei der Herstellung von unter Ausschluß von Wasser lagerfähigen, und bei Zutritt von Feuchtigkeit bei Raumtemperatur zu Elastomeren härtbaren Massen. Solche Massen werden durch Vermischen von kondensationsfähige Endgruppen aufweisenden Diorganopolysiloxanen und vernetzenden Siliciumverbindungen erhalten.

Es ist bekannt, Ketoximosilane durch Umsetzung von Alkyltrichlorsilanen mit Ketoximen herzustellen (vgl. DE-PS 13 01 140, EP-A2-0 082 324, SU-PSs 435 243 und 724 514). Bei der Durchführung dieser Verfahren besteht stets die Gefahr, daß Ketoxim bzw. Ketoximosilan mit Substanzen saurer Natur in Kontakt kommen. Intermediär entstehendes HCl bildet dann das Hydrochlorid des Ketoxims. Beispielsweise siedet Methylethylketoxim unter Normaldruck bei 152 °C, während sich dessen Hydrochlorid bereits bei 50 bis 70 °C sehr heftig zersetzt. Solche Zersetzungen können außerdem schon durch katalytische Mengen von z.B. FeCl₃ ausgelöst werden. Auch Ketoximosilane neigen unter solchen Bedingungen zu explosionsartigen Zersetzungen. L. J. Tyler (Chem. Eng. News 52 (1974) 35, 3) berichtet von zwei heftigen Explosionen dieser Art.

Es bestand deshalb die Aufgabe, ein Herstellungsverfahren für Ketoximosilane zu finden, bei dem die Gefahr von Zersetzungen oder Explosionen nicht besteht.

In Erfüllung dieser Aufgabe wurde nun ein Verfahren zur Herstellung von Monoalkyl-ketoximosilanen und/oder Monoalkyl-ketoximoalkoxysilanen der allgemeinen Formel

$$R^1Si(ON=X)_{(3-a)}(OR^2)_a,$$

in der a Werte von 0 bis 2 annehmen kann, R¹ und R² für gleiche oder ungleiche Alkylreste mit 1 bis 6 C-Atomen stehen und X eine Gruppe der Formel CR'R² ist, gefunden, das dadurch gekennzeichnet ist, daß man Alkyltrialkoxysilane der Formel

$$R^1Si(OR^2)_3$$

mit einem Ketoxim der Formel

$$HON=X$$

in Gegenwart von Alkalimetallen oder von mindestens einer basischen Verbindung von Elementen aus der 1. oder 2. Hauptgruppe und der 3. Nebengruppe des Periodischen Systems der Elemente und der Lanthaniden umsetzt.

In den Formeln können R¹ und R² für gleiche oder ungleiche Alkylreste, wie z.B. die Methyl-, Ethyl-und Isopropylreste, stehen.

Die Umsetzung wird durch Zusatz basischer Substanzen katalysiert. Die Katalysatoren werden in Mengen von 10 bis 200 mg pro Mol Alkoxysilan eingesetzt. Als solche kommen in Frage:

In Ketoxim aufgelöste Alkalimetalle, Alkalimetallcarbonate und -hydroxide, Oxide und Carbonate der Elemente der 2. Hauptgruppe und 3. Nebengruppe des Periodischen Systems der Elemente und der Lanthaniden.

Bei der erfindungsgemäßen Umsetzung wird Alkohol der Formel R²OH freigesetzt. Dieser freiwerdende Alkohol wird durch Kolonnendestillation aus dem Gleichgewicht entfernt. Darum muß die Kombination der Ausgangsprodukte so gewählt werden, daß R²OH die tiefstsiedende Komponente aller Reaktionsteilnehmer ist.

Die Zahl der im Durchschnitt ausgetauschten Alkoxygruppen kann durch folgende, dem Fachmann an sich bekannte Maßnahmen, die einzeln oder in Kombination angewendet werden können, gesteuert werden:

1. Mengenverhältnis Alkoxysilan · Ketoxim;
2. Höhe der Umsetzungstemperatur;
3. Dauer der Umsetzung;
4. vollständiges oder unvollständiges Abdestillieren des freiwerdenden Alkohols.

Die Umsetzung wird im allgemeinen unter Normaldruck durchgeführt. Dabei können die Reaktionstemperaturen zwischen 100 und 190 °C - schwanken, wobei bei tieferen Temperaturen überwiegend Alkoxygruppen enthaltende Ketoximosilane gebildet werden, während höhere Temperaturen die vollständige Abtrennung der Alkoxygruppen fördern, sofern entsprechende stöchiometrische Mengen an Ketoximen eingesetzt werden.

Das erfindungsgemäße Verfahren läßt sich sehr einfach durchführen. Es geht von leicht erhältlichen und im Handel befindlichen Ausgangsmaterialien aus; bei seiner Durchführung kann in keiner Phase ein saurer und damit explosionsgefährlicher Zustand entstehen.

Ein weiterer Vorteil des erfindungsgemäßen Verfahrens besteht darin, daß ohne Verwendung eines Lösungsmittels gearbeitet werden kann, so daß bei seiner technischen Durchführung Lösungsmittelkreisläufe entfallen. Dies schließt jedoch nicht aus, daß das Verfahren im Bedarfsfall auch in einem geeigneten Lösungsmittel durchgeführt werden kann.

Beispiel 1

Methyl-tris-(ethyl-methyl-ketoximo)-silan

Zur Umsetzung dient eine Destillationsapparatur, bestehend aus einem 4-Liter-Siedekolben mit aufgesetzter Füllkörperkolonne (Länge: 83 cm; Füllung: Wilson-Spiralen aus Glas), automatischem Kolonnenkopf und Vorlagekolben.

Der Siedekolben wird mit 2 198 g Methyl-ethyl-ketoxim (25,2 Mole), 384 mg Calciumoxid und 486 g Methyl-trimethoxysilan (3,6 Mole) beschickt. Es folgt 2 Stunden Erhitzen am Rückfluß. Anschließend wird im Laufe von 13 Stunden Methanol bei Normaldruck abdestilliert. Die Methanolabnahme ist beendet, wenn die Kopftemperatur auf ca. 135 °C gestiegen ist. Das überschüssige Ketoxim wird im Vakuum abdestilliert und kann wieder eingesetzt werden.

Das im Siedekolben verbliebene Rohprodukt wird in einer separaten Apparatur ohne Kolonne bei 0,4 mbar bei 99 bis 101 °C destilliert. Es werden 904 g Methyl-tris-(ethyl-methyl-ketoximo)-silan erhalten.

Beispiel 2

$CH_3Si[ON = C(CH_3)(C_2H_5)]_{1,9} (OCH_3)_{1,1}$

Apparatur, Einsatzsubstanzen und -mengen sind mit Beispiel 1 identisch. In der Verfahrensweise wird lediglich die Methanolabdestillation nach 5 Stunden abgebrochen. In dem anschließend bei ca. 1 mbar abdestillierten, überschüssigen Methyl-ethyl-ketoxim kann gaschromatographisch kein Methanol nachgewiesen werden. Durch Destillation bei 0,4 bis 0,5 mbar und 71 bis 103 °C werden 763 g Endprodukt erhalten. Durch Ketoximogruppen-Bestimmung läßt sich nachweisen, daß dieses Produkt im Mittel 1,9 Ketoximogruppen pro Mol enthält.

Beispiele 3 bis 8

Die in der folgenden Tabelle zusammengefaßten Beispiele wurden mit dem Ziel eines möglichst quantitativen Alkoxygruppen-Austausches bei möglichst hoher Ausbeute durchgeführt. Die Durchführung der Beispiele ist dem Beispiel 1 analog.
Das Beispiel 3 dient zu Vergleichszwecken.

| Beispiel Nr. | Eingesetztes Ketoxim (Mole) | Silan (Mole) | Katalyator (mg) | Erhaltenes Ketoximosilan (Mole) |
|---|---|---|---|---|
| 3 | $HON=C(CH_3)(C_2H_5)$ (12,6) | $CH_3 Si(OCH_3)_3$ (1,8) | ohne | $CH_3 Si[ON=C(CH_3)(C_2H_5)]_3$ (0,6) |
| 4 | $HON=C(CH_3)(C_2H_5)$ (12,6) | $CH_3 Si(OCH_3)_3$ (1,8) | Na (103) | $CH_3 Si[ON=C(CH_3)(C_2H_5)]_3$ (1,3) |
| 5 | $HON=C(CH_3)(C_2H_5)$ (5,4) | $(CH_3-CH_2-CH_2)Si(OCH_3)_3$ (0,6) | $La_2O_3$ (93) | $(CH_3-CH_2-CH_2)Si[ON=C(CH_3)(C_2H_5)]_3$ (0,4) |
| 6 | $HON=C(CH_3)(C_2H_5)$ (5,4) | $[(CH_3)_2CH-CH_2]Si(OCH_3)_3$ (0,6) | $Sm_2O_3$ (97) | $[(CH_3)_2CH-CH_2]Si[ON=C(CH_3)(C_2H_5)]_3$ (0,4) |
| 7 | $HON=C(CH_3)(C_2H_5)$ (5,4) | $CH_3 Si(OC_2H_5)_3$ (0,6) | $CaCO_3$ (95) | $CH_3 Si[ON=C(CH_3)(C_2H_5)]_3$ (0,3) |
| 8 | $HON=C(CH_3)_2$ (10,8) | $CH_3 Si(OCH_3)_3$ (1,8) | $Mg(OH)_2$ (197) | $CH_3 Si[ON=C(CH_3)_2]_3$ (1,2) |

## Ansprüche

1. Verfahren zur Herstellung von Ketoximosilanen der Formel

$$R'Si(ON = X)_{(3-a)}(OR^2)_a,$$

in der a Werte von 0 bis 2 annehmen kann, R¹ und $R^2$ für gleiche oder ungleiche Alkylreste mit 1 bis 6 C-Atomen stehen und X eine Gruppe der Formel $CR'R^2$ ist, **dadurch gekennzeichnet,** daß man Alkyltrialkoxysilane der Formel

$$R'Si(OR^2)_3$$

mit einem Ketoxim der Formel

$$HON = X$$

in Gegenwart von Alkalimetallen oder von mindestens einer basischen Verbindung von Elementen aus der 1. und 2. Hauptgruppe und der 3. Nebengruppe des Periodischen Systems der Elemente und der Lanthaniden umsetzt.

2. Verfahren zur Herstellung von Ketoximosilanen gemäß Anspruch 1, dadurch gekennzeichnet, daß als Metallverbindungen die Hydroxide, Oxide oder Carbonate dieser Metalle eingesetzt werden.

3. Verfahren zur Herstellung von Ketoximosilanen gemäß Anspruch 1 oder 2, dadurch gekennzeichnet, daß die Alkalimetalle oder die Metallverbindungen in Mengen von 10 bis 200 mg pro Mol eingesetzten Alkyltrialkoxysilans eingesetzt werden.

4. Verfahren zur Herstellung von Ketoximosilanen gemäß einem der Ansprüche 1 bis 3, dadurch gekennzeichnet, daß die Umsetzung lösungsmittelfrei durchgeführt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | CHEMICAL ABSTRACTS, Band 83, Nr. 21, 24. November 1975, Seite 599, Spalte 1, Zusammenfassungsnr. 17292k, Columbus, Ohio, US; & JP - A - 74 39967 (SHIN-ETSU CHEMICAL INDUSTRY CO., LTD.) 30.10.1974 --- | 1 | C 07 F    7/18 |
| A | DE-A-2 055 712  (RHONE-POULENC) * Beispiel 3, Tabelle III * --- | 1 | |
| A | EP-A-0 098 369  (ALLIED CORP.) * Anspruch 1 * --- | 1 | |
| A | US-A-4 384 131  (KANNER et al.) * Anspruch 1 * ----- | 1 | |

**RECHERCHIERTE SACHGEBIETE (Int. Cl.3)**

C 07 F    7/08
C 07 F    7/18

Der vorliegende Recherchenbericht wurde für alle Patentansprüche erstellt

| Recherchenort | Abschlußdatum der Recherche | Prüfer |
|---|---|---|
| BERLIN | 25-02-1988 | KAPTEYN H G |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes
   Dokument

EPO FORM 1503 03.82 (P0403)